# EUROPÄISCHE PATENTSCHRIFT

(11) **EP 1 245 331 B1**
(45) Veröffentlichungstag und Bekanntmachung des Hinweises auf die Patenterteilung: **04.02.2004**
(21) Anmeldenummer: 02006053.9
(22) Anmeldetag: 16.03.2002
(51) Int. Cl.: B23Q 16/00, B23Q 7/03, B23Q 39/02, B23Q 3/18

(54) **Spannsystem zum Spannen und gegebenenfalls Zentrieren von Profilrahmen**
Clamping system for fixing and centering profile frames
Système de serrage pour la fixation et le centrage des cadres en profilés

(30) Priorität: 29.03.2001 DE 10115653
(43) Veröffentlichungstag der Anmeldung: 02.10.2002
(73) Patentinhaber: ROTOX GmbH B. EISENBACH, 56858 Grenderich (DE)
(72) Erfinder: Eisenbach, Bernd, 65611 Brechen (DE); Niewrzoll, Peter, 65554 Limburg-Ahlbach (DE)
(74) Vertreter: Müller, Eckhard, Dr.

(56) Entgegenhaltungen:
- EP-A- 0 429 417
- EP-A- 0 460 654

## Beschreibung

Die Erfindung betrifft ein Spannsystem zum Spannen von Profilrahmen, beispielsweise Fenster- oder Türrahmen bestehend aus verschweißten Kunststoffprofilen, in Kombination mit einer Verputzvorrichtung, zum Beispiel Eckenverputzvorrichtung, mit wenigstens zwei Bearbeitungseinheiten zur gleichzeitigen Bearbeitung zweier Ecken des Profilrahmens, mit einer Transportvorrichtung für den Profilrahmen hin zu den Bearbeitungseinheiten, mit in der Bearbeitungsposition des Profilrahmens paarweise der Innenseite und Außenseite des Profilrahmens zugeordneten, in vertikaler Richtung verstellbaren Anschlägen und mit in vertikaler Richtung verstellbaren Spannvorrichtungen zum Einspannen des Profilrahmens in der Bearbeitungsposition, wie es aus der Patentanmeldung EP 429 417 bekannt ist. Die Erfindung betrifft weiterhin ein entsprechendes Verfahren.

Zum Spannen und gegebenenfalls Zentrieren sind bei derartigen Zweikopf-Eckenputzautomaten mit wenigstens zwei Bearbeitungseinheiten, zum Beispiel Revolverköpfen mit Werkzeugen, üblicherweise die folgenden Mittel vorgesehen: Aus der Ebene für eine Auflage für den Profilrahmen werden zwei Anschläge mit Schaltern in vertikaler Richtung hochgefahren, gegen welche die gegenüberliegenden Innenecken des Profilrahmens beispielsweise mittels Fanghaken gezogen werden. Danach erfolgt eine Einspannung des Rahmens in dieser Position, indem von oben Spannbalken auf das Profil gepreßt werden. Die an den Anschlägen angeordneten Schalter sind als Einlegeschalter ausgebildet und dienen der genauen Detektion der Positionierung des Profils, aber auch der Profilerkennung. So kann beispielsweise mittels dieser Schalter zwischen einem Blend- oder Flügelrahmen unterschieden werden.

Nachteilig bei der bekannten Vorrichtung ist zum einen, daß der an dem Innenanschlag angeordnete obere Schalter beim Absenken des Anschlages häufig am Überschlag des Profils hängenbleibt, so daß das Profil per Hand aus dem Spannsystem herausgenommen werden muß. Ein weiteres Problem besteht darin, daß die Anzahl der in den Anschlägen unterzubringenden Schalter begrenzt ist. Üblicherweise können lediglich zwei Schalter übereinander angeordnet werden, so daß beispielsweise nicht unterschieden werden kann, ob ein Flügelrahmen oder ein T-Profil als Profilrahmen zur Bearbeitung gelangt. Ebenso ist es nicht möglich, zu erfassen, ob das T-Profil beziehungsweise der Flügelrahmen mit dem Überschlag auf der Auflage oder mit dem Überschlag nach oben weisend angeordnet ist. Diese unterschiedlichen Positionierungen haben unterschiedliche Bearbeitungen zur Folge, so daß bei den herkömmlichen Vorrichtungen nicht immer ein automatisches Erkennen des jeweiligen Profils, der Profillage oder dergleichen zum selbsttätigen Einstellen der jeweiligen Bearbeitungsschritte möglich ist.

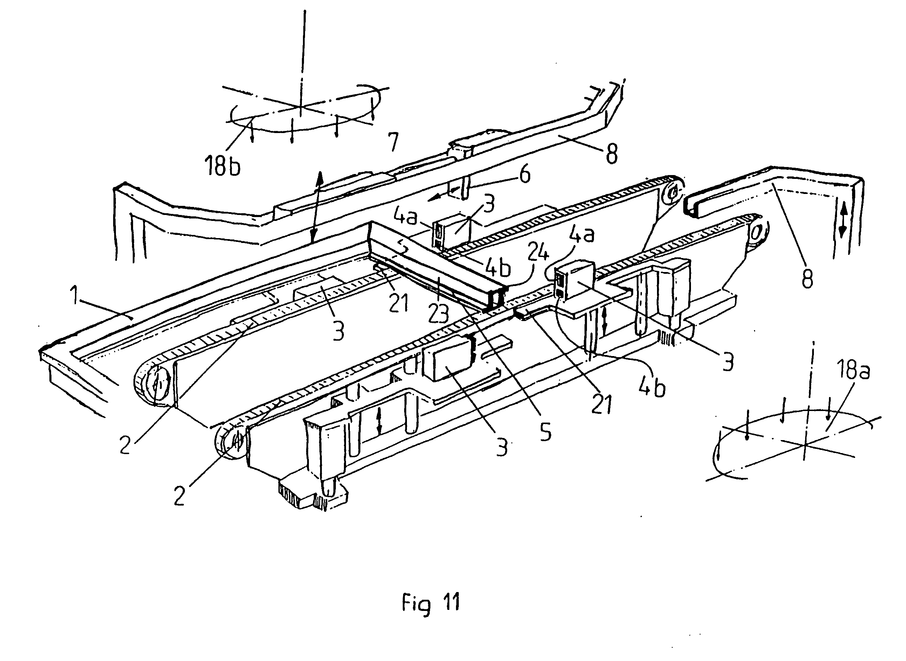

In Figur 11 ist ein bekanntes Spannsystem zum Spannen und gegebenenfalls Zentrieren von Profilrahmen in Kombination mit einer Eckenputzvorrichtung dargestellt. Der zu bearbeitende Profilrahmen 1 wird mittels zweier Transportbänder 2 in eine Bearbeitungsposition überführt, so daß die nur schematisch dargestellten Bearbeitungseinheiten, 18a, 18b, beispielsweise Revolverköpfe mit Werkzeug, gleichzeitig eine Bearbeitung der Ecken des Profilrahmens 1 durchführen können. Das Spannsystem besteht aus mehreren, in vertikaler Richtung verfahrbaren Anschlägen 3 mit oberen und unteren Schaltern, zum Beispiel Einlegeschaltern, wobei jeweils zwei der Anschläge paarweise einander zugeordnet sind und den Profilrahmen 1 zwischen sich einschließen. Die Schalter 4a, 4b dienen zum einen als Startschalter, wodurch festgestellt wird, ob ein Profilrahmen 1 überhaupt in die Vorrichtung eingelegt und hin zu den Anschlägen 3 transportiert wurde. Zum anderen kann durch die Anordnung der beiden Schalter übereinander festgestellt werden, welcher Art der zu bearbeitende Profilrahmen 1 ist, das heißt, ob beispielsweise der Überschlag 5 unmittelbar der Auflage 21 aufliegt oder aber einen Abstand zur Auflage 21 aufweist. Wenn nun der Anschlag 3 in vertikaler Richtung aus der Transportebene nach oben gefahren ist, erfolgt ein Verschieben des Profilrahmens 1 und Anpressen an den oder die Anschläge 3 mittels des Schiebers 6, welcher durch einen Verschiebezylinder 7 unter Zwischenlage des Profilrahmens 1 in Richtung der auf der Innenseite 23 positionierten Anschläge 3 verfahren worden ist. Nach erfolgtem Zentrieren werden nun die Spannbalken 8 auf den Profilrahmen 1 abgesenkt, so daß der Profilrahmen 1 zwischen Spannbalken 8 und Auflage 21 eingespannt ist. Anschließend kann die Bearbeitung des Profilrahmens 1, insbesondere das sogenannte Verputzen der Ecken mittels der Bearbeitungseinheiten 18a, 18b erfolgen.

Obwohl sich diese Vorrichtung insgesamt recht gut bewährt hat, erweist es sich unter Umständen als nachteilig, daß dann, wenn der Überschlag 5 auf der Auflage 21 aufliegt, der obere Schalter 4a des oder der Anschläge 3 beim vertikalen Absenken dieser Anschläge an dem Überschlag 5 hängenbleiben kann. Ein weiterer Nachteil dieser bekannten Vorrichtung besteht auch darin, daß der Profilrahmen 1 nur mittels einer Inneneckzentrierung, also einer Zentrierung an der Innenseite 23, nicht aber an der Außenseite 24, zentriert werden kann. Schließlich ist es auch nachteilig, daß eine Erkennung des Profils nur hinsichtlich der Anordnung des Überschlages 5 nach oben oder nach unten erkannt werden kann. Eine Profilerkennung an sich ist nicht möglich.

Demgegenüber liegt der vorliegenden Erfindung die Aufgabe zugrunde, ein Spannsystem der eingangs genannten Art dahingehend weiterzubilden, das ein einfaches Positionieren und gegebenenfalls Zentrieren sowie Spannen der jeweiligen Profile ermöglicht, sowohl eine Innen- als auch eine Außeneckzentrierung gewährleistet ist und darüber hinaus unterschiedliche Profilarten in einfacher Weise erkennbar sind.

Diese Aufgabe wird bei dem Spannsystem mit den eingangs genannten Merkmalen im wesentlichen dadurch gelöst, daß die Spannvorrichtungen in der Bearbeitungsposition des Profilrahmens paarweise der Innenseite und Außenseite des Profilrahmens zugeordnet sind sowie eine Spannvorrichtung und ein Anschlag, die gemeinsam an der Innenseite oder Außenseite angeordnet sind, einander zugeordnet und gemeinsam in horizontaler Richtung verfahrbar sind.

Dadurch, daß die Anschläge nicht nur in vertikaler Richtung, sondern auch in horizontaler Richtung verfahrbar sind, ist beim Absenken der Anschläge aus der angehobenen Position vermieden, daß der oder die an den Anschlägen angeordneten Schalter beispielsweise an den Überschlägen des Rahmenprofils hängenbleiben. Weiterhin kann durch die horizontale Verfahrbarkeit der Anschläge gemeinsam mit den Spannvorrichtungen der Profilrahmen entweder an der Innenseite oder an der Außenseite zentriert werden, so daß eine Inneneckbeziehungsweise Außeneckzentrierung je nach Bedarf durchführbar ist. Weiterhin treten die auf der Innenseite und Außenseite des Profilrahmens angeordneten Anschläge mit dem Profilrahmen in Kontakt, so daß die an oder auf den Anschlägen angeordneten Schalter das Profil von beiden Seiten abtasten und erkennen können. Schließlich besteht die Möglichkeit, daß der Hub der Spannvorrichtung beim Einspannen des Profils meßtechnisch erfaßt und hieraus die Höhe des jeweiligen Profils ermittelt wird, so daß ein zusätzliches Kriterium zur Profilunterscheidung der jeweiligen zur Bearbeitung gelangenden Profilrahmen gegeben ist.

Eine vorteilhafte Ausgestaltung des erfindungsgemäßen Spannsystems besteht darin, daß die Anschläge und Spannvorrichtungen unabhängig voneinander in vertikaler Richtung verfahrbar sind, wodurch die Flexibilität des Systems erheblich gefördert wird.

Ein besonders sicheres und exaktes Spannen und gegebenenfalls Zentrieren des Profilrahmens wird nach einer anderen vorteilhaften Weiterbildung der Erfindung dadurch gewährleistet, daß jeweils zwei Paare von Anschlägen und/oder Spannvorrichtungen vorgesehen sind, so daß der Profilrahmen an zwei Einspannstellen eingespannt werden kann.

Nach einer weiteren vorteilhaften Ausgestaltung der Erfindung sind sämtliche Anschläge und Spannvorrichtungen, die jeweils gemeinsam der Innenseite oder der Außenseite des Profilrahmens zugeordnet sind, gemeinsam in horizontaler Richtung verfahrbar. So besteht beispielsweise die Möglichkeit, die einander zugeordneten beiden Spannvorrichtungen und Anschläge auf der Innenseite des Profilrahmens mittels einer einzigen Hubvorrichtung gemeinsam in horizontaler Richtung zu verfahren. Gleiches gilt auch für die beiden Spannvorrichtungen und Anschläge, die auf der Außenseite des Profilrahmens angeordnet sind.

Von Vorteil besteht die Transportvorrichtung nach einer weiteren Ausführungsform der Erfindung aus zwei im wesentlichen parallelen Transportbänder, deren seitlicher Abstand verstellbar ist, so daß auch unterschiedlich breite Profilrahmen mittels des Spannsystems gespannt und gegebenenfalls zentriert werden können.

Dabei bietet es sich an, daß die Anschläge gemeinsam auf der Innenseite oder Außenseite des Transportbandes und die Spannvorrichtungen auf der Außenseite oder Innenseite des Transportbandes positioniert sind, so daß die zur Anlage an die Anschläge gelangende Längs- oder Querseite des Profilrahmens eine sichere Abstützung der weit voneinander beabstandeten Anschläge erfährt. Natürlich kann es sich auch anbieten, die Anordnung von Anschlägen und Spannvorrichtungen insoweit zu vertauschen, daß wechselseitig eine Spannvorrichtung innen und die weitere Spannvorrichtung außenseitig des Transportbandes angeordnet ist und die Anschläge eine korrespondierende Positionierung aufweisen.

Von Vorteil sind jedem Anschlag und jeder Spannvorrichtung zur Verstellung in vertikaler Richtung jeweils eine individuelle Hubrichtung, zum Beispiel pneumatisch betätigte Hubzylinder oder dergleichen Hubmechanismen zugeordnet.

Weiterhin hat es sich als äußerst vorteilhaft erwiesen, daß zum gemeinsamen Verfahren von jeweils einem Anschlag und der zugeordneten Spannvorrichtung in horizontaler Richtung eine Hubvorrichtung bereitgestellt ist.

Die Hubvorrichtung ist gemäß einer besonders vorteilhaften Weiterbildung der Erfindung als Tandemzylinder mit einem ersten Zylinder größeren Durchmessers und einem zweiten Zylinder kleineren Durchmessers ausgebildet.

Die Spannvorrichtung weist von Vorteil Spannelemente mit hakenförmigen Fortsätzen auf, die das Rahmenprofil in der Bearbeitungsposition gegen eine Auflage oder dergleichen spannen.

Nach einer besonders vorteilhaften Ausgestaltung zeichnet sich das Spannsystem dadurch aus, daß die Spannvorrichtung, insbesondere Spannelemente mit hakenförmigen Fortsätzen der Spannvorrichtung, das Rahmenprofil in der Bearbeitungsposition gegen die Transportvorrichtung selbst, insbesondere das Transportband und/oder die Führungsschiene spannt. Insoweit weist die Transportvorrichtung nicht nur die Funktion auf, den Profilrahmen an die entsprechende Bearbeitungsposition zu transportieren, sondern dient gleichzeitig als Auflage für das Rahmenprofil, so daß das Rahmenprofil in der Bearbeitungsposition gegen insbesondere das Transportband oder die Führungsschiene gespannt ist.

Weiterhin hat es sich als vorteilhaft erwiesen, daß der oder die Anschläge wenigstens einen, bevorzugt zwei übereinander angeordnete Schalter, bevorzugt Einlegeschalter, aufweisen. Die Erfindung betrifft auch ein Verfahren zum Spannen und gegebenenfalls Zentrieren von Profilrahmen, insbesondere mittels eines Spannsystems nach den vorhergehenden Ansprüchen. Das Verfahren ist im wesentlichen dadurch gekennzeichnet, daß man einander zugeordnete Anschläge und Spannvorrichtungen, gegebenenfalls unabhängig voneinander, an der Außenseite des Profilrahmens in vertikaler Richtung ausfährt, mittels der Transportvorrichtung den Profilrahmen gegen den oder die herausgefahrenen Anschläge verfährt, die Transportvorrichtung stoppt. Danach werden einander zugeordnete Anschläge und Spannvorrichtungen, gegebenenfalls unabhängig voneinander, an der Innenseite des Profilrahmens in vertikaler Richtung ausgefahren, einander zugeordnete Anschläge und Spannvorrichtungen an der Innenseite gemeinsam in horizontaler Richtung hin zu den einander zugeordneten Anschlägen und Spannvorrichtungen an der Außenseite oder umgekehrt die einander zugeordneten Anschläge und Spannvorrichtungen an der Außenseite hin zu den einander zugeordneten Anschlägen und Spannvorrichtungen an der Innenseite verfahren und dann wenigstens die Spannvorrichtungen in vertikaler Richtung zum Spannen hin auf den Profilrahmen verfahren.

Das Verfahren weist die eingangs hinsichtlich des Spannsystems genannten Vorteile auf.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: in perspektivischer Darstellung ein Ausführungsbeispiel der Erfindung mit dem Profilrahmen teilweise geschnitten,
- Figur 2: in vergrößerter Darstellung das eine Transportband der Vorrichtung gemäß Figur 1 mit den zugeordneten Anschlägen und Spannvorrichtungen sowie mit teilweise geschnittenem Profilrahmen,
- Figuren 3 bis 6: ein weiteres Ausführungsbeispiel der Erfindung in Seitenansicht zur Erläuterung der Verfahrensschritte bei Zentrierung des Profilrahmens an der Innenseite (Inneneckzentrierung) und
- Figuren 7 bis 10: das Ausführungsbeispiel der Figuren 3 bis 6 mit dem Verfahrensablauf bei Zentrierung des Profilrahmens an der Außenseite (Außeneckzentrierung) und
- Figur 11: eine Spannvorrichtung nach dem Stand der Technik in schematischer Darstellung und perspektivischer Ansicht mit den Spannbalken teilweise geschnitten.

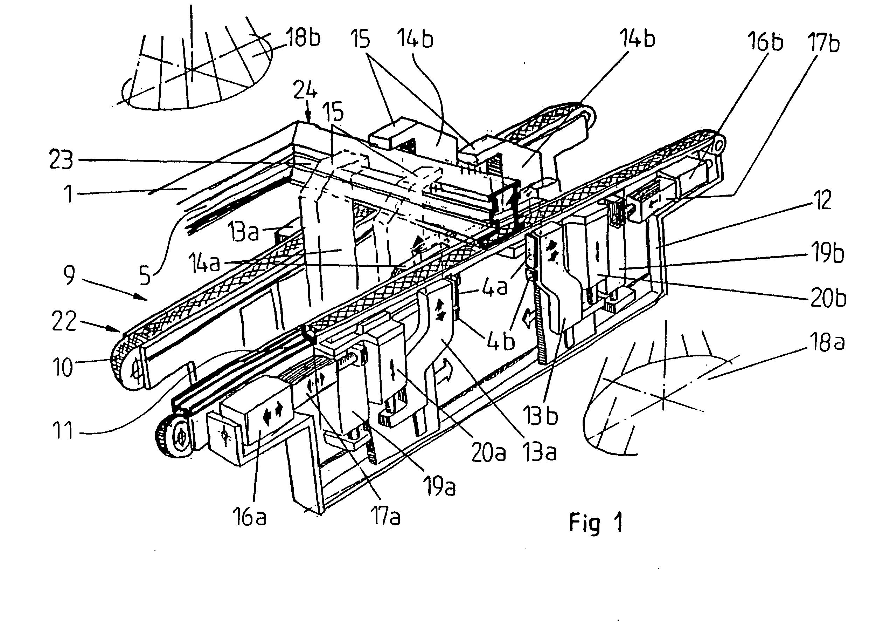

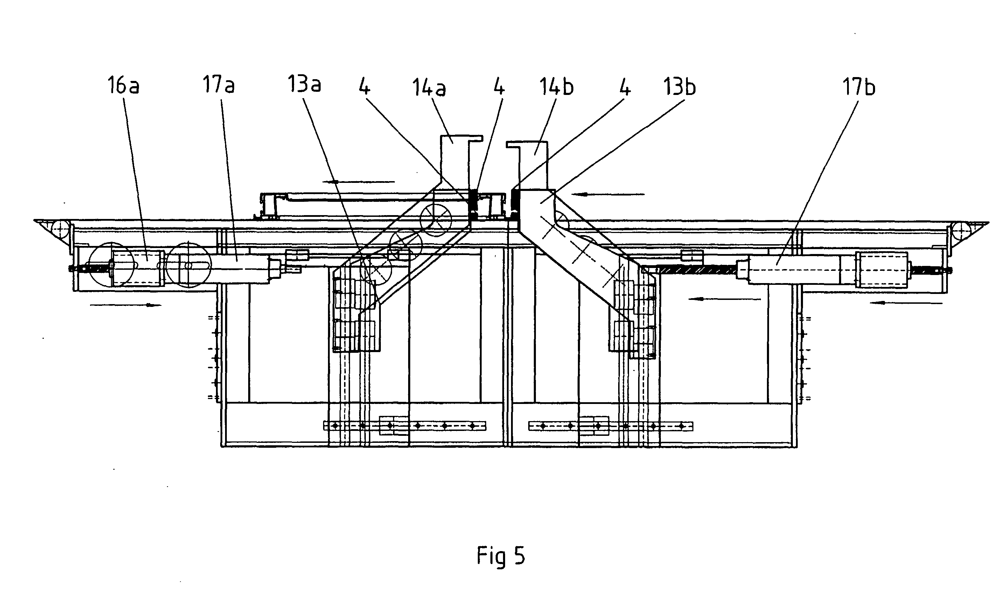

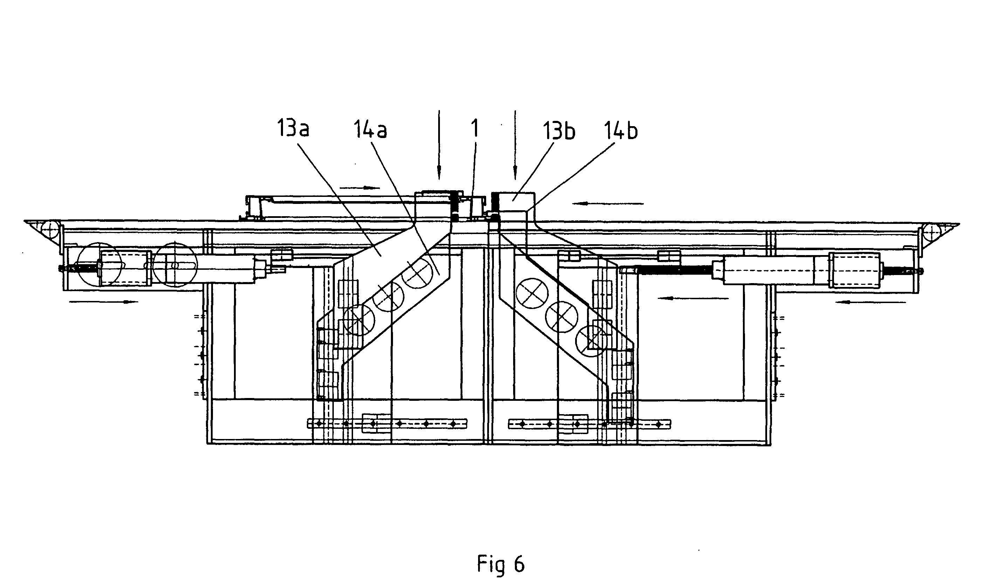

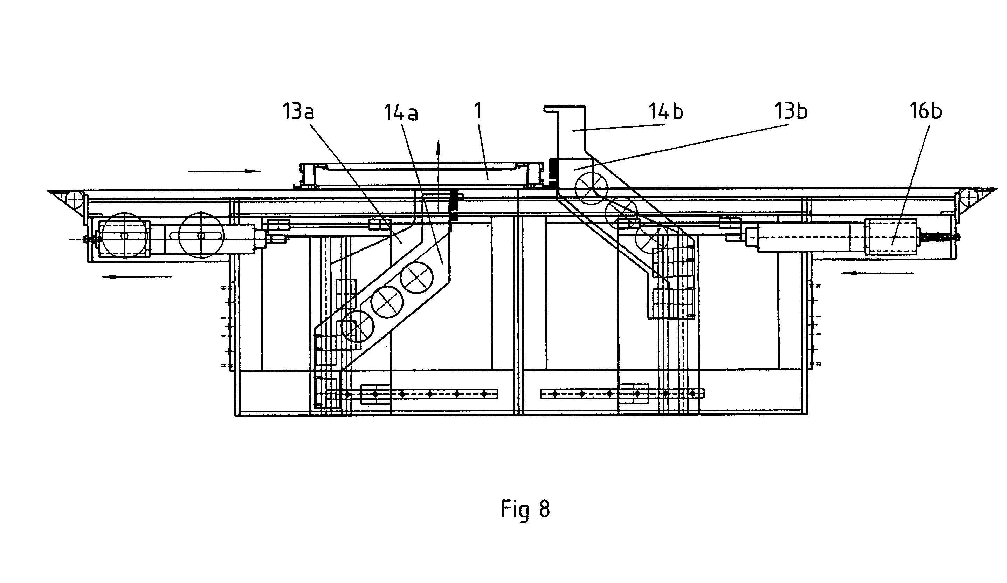

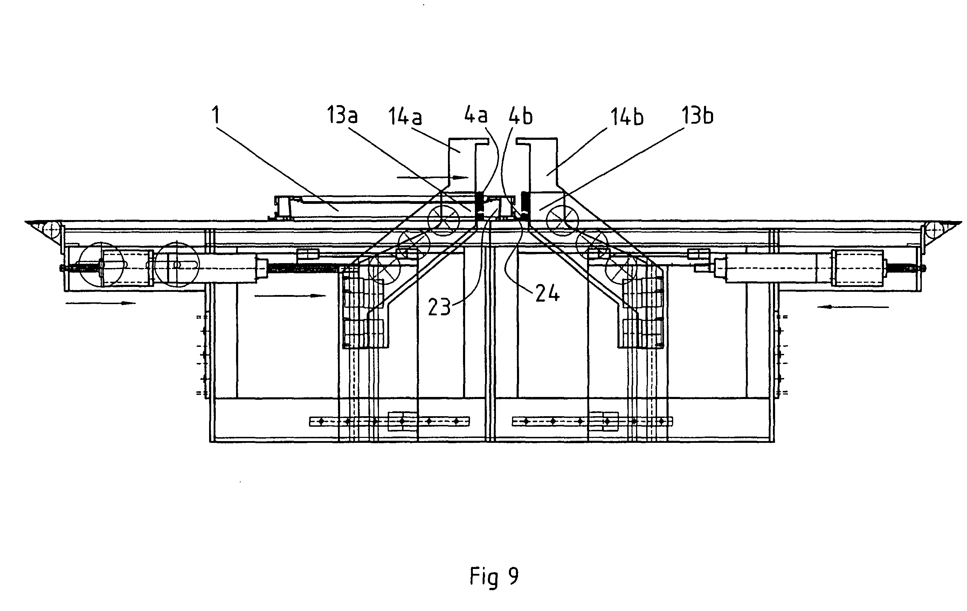

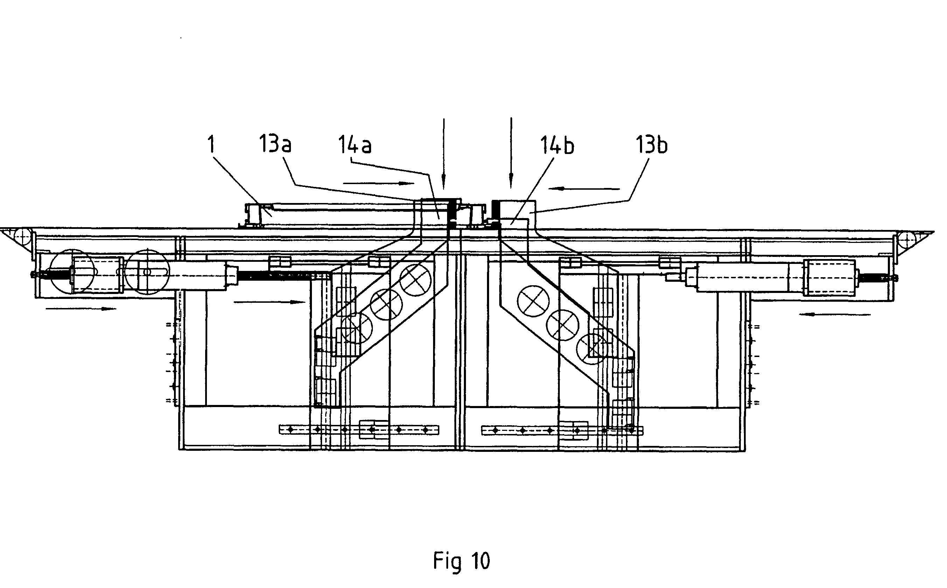

Das in den Figuren 1 bis 10 wiedergegebene Spannsystem 9 dient zum Spannen und gegebenenfalls Zentrieren von Profilrahmen 1, beispielsweise Fenster- oder Türrahmen, welche aus insbesondere verschweißten Kunststoffprofilen bestehen. Das Spannsystem 9 ist einer Putzvorrichtung, zum Beispiel einer Eckenputzvorrichtung mit wenigstens zwei Bearbeitungseinheiten 18a, 18b zu gleichzeitigen Bearbeitung des Profilrahmens 1, zum Beispiel zweier Ecken, zugeordnet. Das Spannsystem 9 weist eine Transportvorrichtung 22 auf, die im vorliegenden Ausführungsbeispiel aus zwei Transportbändern 10 besteht, welche in Führungsschienen 11 geführt sind und mittels eines Antriebes in Vorschub- oder Rückschubbewegung versetzt werden können. Es versteht sich, daß die beiden Transportbänder 10 synchron angetrieben werden. An dem Rahmen 12 des Spannsystems 9 befinden sich sowohl auf der Innenseite 23 als auch auf der Außenseite 24 jeweils zwei in vertikaler Richtung verstellbare Anschläge 13a, 13b. Diese Anschläge 13a, 13b sind bevorzugt mit zwei Schaltern 4a, 4b, nämlich einem oberen Schalter 4a und einem unteren Schalter 4b, bevorzugt Einlegeschaltern, bestückt. Diese Einlegeschalter 4a, 4b treten mit der jeweils zugeordneten Innenseite 23 oder Außenseite 24 des Profilrahmens in Kontakt. Jedem Anschlag 13a, 13b ist eine Spannvorrichtung 14a, 14b zugeordnet, die ebenfalls in vertikaler Richtung verstellbar sind und zum Einspannen des Profilrahmens in der Bearbeitungsposition dienen. Die Spannvorrichtungen 14a, 14b sind durch Spannelemente mit hakenförmigen Fortsätzen 15 gebildet, die das Rahmenprofil in der Bearbeitungsposition gegen eine Auflage 21 oder dergleichen spannen.

Die Spannvorrichtungen 14a, 14b sind in der Bearbeitungsposition des Profilrahmens 1 paarweise der Innenseite 23 und Außenseite 24 des Profilrahmens 1 zugeordnet. Weiterhin sind jeweils eine Spannvorrichtung 14a, 14b sowie ein Anschlag 13a, 13b, die gemeinsam an der Innenseite 23 oder Außenseite 24 angeordnet sind, einander zugeordnet und gemeinsam in horizontaler Richtung verfahrbar. Hingegen können die Anschläge 13a, 13b sowie Spannvorrichtungen 14a, 14b unabhängig voneinander in vertikaler Richtung verfahren werden.

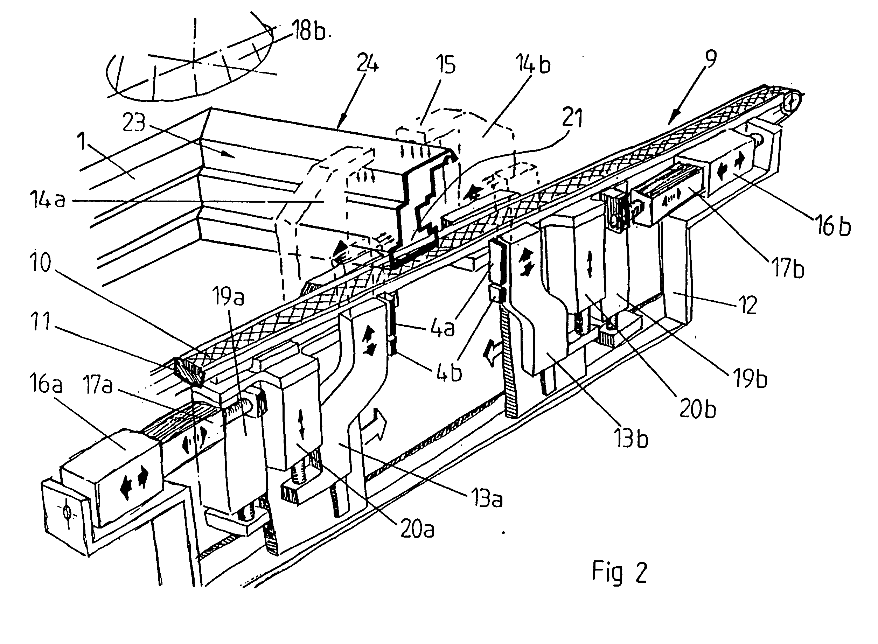

Wie insbesondere aus Figur 1 ersichtlich ist, sind jeweils zwei Paare von Anschlägen 13a, 13b und/oder Spannvorrichtungen 14a, 14b vorgesehen, die die einzuspannende Seite des Profilrahmens 1 in der Bearbeitungsposition zwischen sich einschließen. Weiterhin ist aus Figur 1 beziehungsweise 2 ersichtlich, daß die Anschläge 13a, 13b auf der Außenseite 24 des jeweiligen Transportbandes 10 und die Spannvorrichtungen 14a, 14b auf der Innenseite 23 des jeweiligen Transportbandes positioniert sind. Jedem Anschlag 13a, 13b und jeder Spannvorrichtung 14a, 14b sind zur Verstellung in vertikaler Richtung jeweils eine individuell betätigbare Hubvorrichtung, zum Beispiel pneumatisch betätigte Zylinder 19a, 19b, 20a, 20b zugeordnet, welche am Rahmen 12 des Spannsystems befestigt sind. Zum gemeinsamen Verfahren von jeweils einem Anschlag 13a, 13b und der zugeordneten Spannvorrichtung 14a, 15b in horizontaler Richtung ist ebenfalls eine Hubvorrichtung vorgesehen, die als Tandemzylinder 16a, 17a, 16b, 17b ausgebildet ist mit einem ersten Zylinder 16a, 16b größeren Durchmessers und einem zweiten Zylinders 17a, 17b kleineren Durchmessers. Nur schematisch sind in den Figuren 1 und 2 die Bearbeitungseinheiten 18a, 18b angedeutet, die beispielsweise als mit verschiedenen Werkzeugen bestückter Revolverkopf ausgebildet sind.

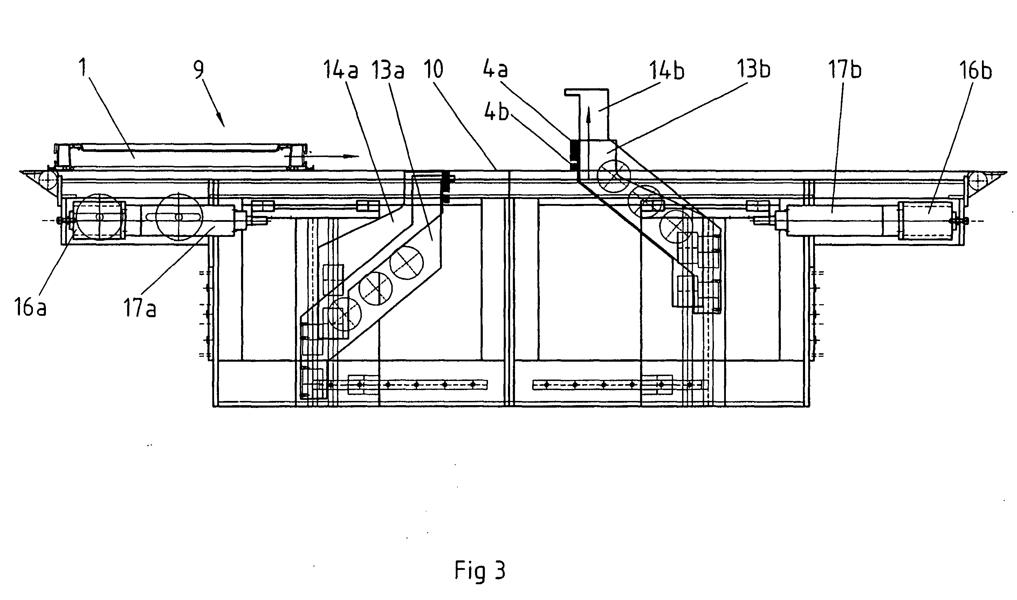

Die Ablaufsteuerung des erfindungsgemäßen Spannsystems 9 wird nachfolgend anhand der Figuren 3 bis 6 für die Inneneckzentrierung dargestellt.

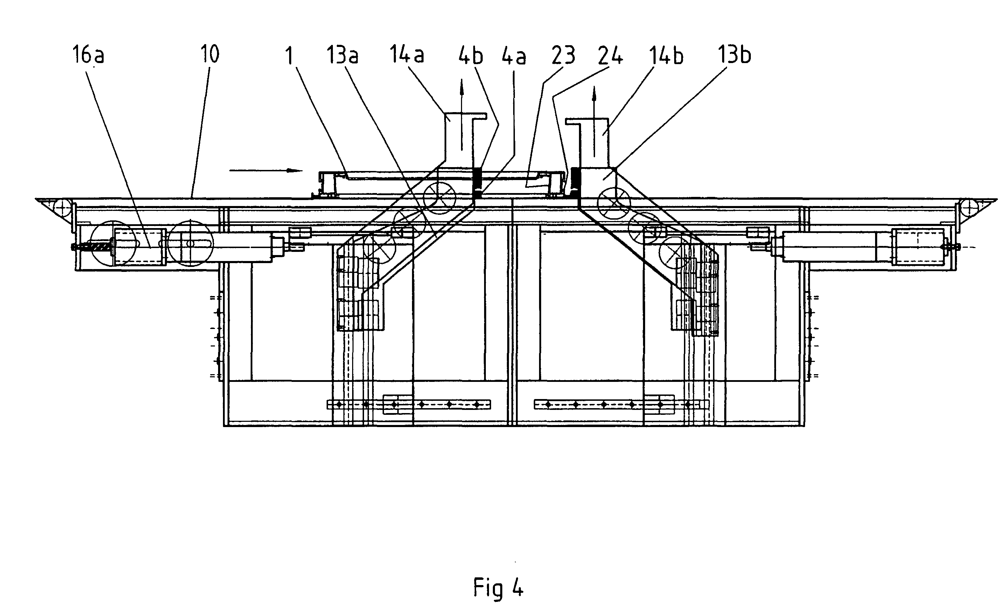

Ausgangspunkt bei der Inneneckzentrierung gemäß Figur 3 ist, daß der Profilrahmen 1 mittels des Transportbandes 10 gegen den oder die ausgefahrenen Anschläge 13b gefahren wird. Die Spannvorrichtung(en) befindet sich ebenfalls in ausgefahrener Stellung, während sich der oder die Anschläge 13a und der oder die Spannvorrichtung 14a in eingefahrener Stellung befinden. Sobald der Profilrahmen 1 mit seiner Außenseite die Schalter 4a, 4b des oder der Anschläge 13b betätigt, wird der Antrieb des Transportbandes 10 gestoppt und der Anschlag 13a sowie gegebenenfalls unabhängig hiervon die Spannvorrichtung 14a von der eingefahrenen Stellung gemäß Figur 3 in die ausgefahrene Stellung gemäß Figur 4 überführt.

Um einen vorgegebenen Referenzpunkt des zu bearbeitenden Profilrahmens 1 bezüglich der Bearbeitungseinheiten 18a, 18b vorgeben zu können, wird der Anschlag 13a mit Spannvorrichtung 14a mittels einer Antriebseinheit in horizontaler Richtung auf den gegenüberliegenden Anschlag 13b verschoben. Bei dem hier gewählten Ausführungsbeispiel ist die Antriebseinheit als Tandemzylinder 16a, 17a, 16b, 17b ausgebildet, wobei der Referenzpunkt durch Ausfahren des Zylinders 16a mit dem größeren Durchmesser in die maximale Hubposition bestimmt wird. Somit ist der Referenzpunkt für den Anschlag 13a festgelegt.

Als nächstes erfolgt ein Verschieben des Profilrahmens 1 mittels des Anschlages 13b gegen den Anschlag 13a. Für die Verschiebbarkeit des Anschlages 13b mit Spannvorrichtung 14b ist ebenfalls bei dem hier gewählten Ausführungsbeispiel ein Tandemzylinder 16b, 17b vorgesehen. Für das Verfahren des Profilrahmens 1 gegen den Anschlag 13a, also für die Inneneckzentrierung, wird nunmehr der im Durchmesser kleinere Zylinder 17b des Tandemzylinders 16b, 17b verfahren beziehungsweise betätigt. Da dieser Antriebszylinder 17b im Durchmesser kleiner ist als der Antriebszylinder 16a, ist sichergestellt, daß der durch die Stellung des Anschlages 13a festgelegte Referenzpunkt nicht verschoben wird, da aufgrund der durch die Durchmesser festgelegten Kraftverhältnisse der im Durchmesser kleinere Zylinder 17b den größeren Zylinder 16a nicht aus seiner Referenzpositionierung entfernen kann. Gleichzeitig erfolgt jedoch ein Spannen des Profilrahmens zwischen den Anschlägen 13a, 13b. Gleichzeitig werden auch die Schalter 4a, 4b an den Anschlägen 13a, 13b entsprechend der Querschnittsform und Lage des Profilrahmens 1 betätigt, woraus ein Rückschluß auf Profilart und die Anordnung des Überschlages 5 beziehungsweise die Ausbildung des Profils als T-, Z-Profil oder dergleichen gewonnen werden kann.

Anschließend erfolgt ein Spannen des Profilrahmens 1 in senkrechter Richtung von oben durch vertikales Verfahren der Spannvorrichtungen 14a, 14b hin auf den Profilrahmen 1. Der dabei zurückgelegte Hub der Spannvorrichtungen 14a, 14b beziehungsweise der diese Spannvorrichtungen 14a, 14b betätigenden Zylinder kann dazu ausgewertet werden, die Höhe des Profilrahmens 1 zu ermitteln, so daß ein zusätzliches Kriterium zur Profilunterscheidung der jeweiligen zur Bearbeitung gelangenden Profilrahmen 1 gegeben ist. Anschließend erfolgt dann eine Bearbeitung des Profilrahmens 1.

Nach Beendigung der Bearbeitung des Profilrahmens 1 werden die Spannvorrichtungen 14a, 14b durch vertikales Verfahren nach oben gelöst und dann durch horizontales Wegfahren gemeinsam mit den jeweiligen Anschlägen 13a, 13b von dem bearbeiteten Profilrahmen 1 entfernt. Anschließend können die Anschläge 13a, 13b sowie Spannvorrichtungen 14a, 14b vertikal nach unten verfahren werden, so daß der bearbeitete Profilrahmen mittels des Transportbandes 10 von den Bearbeitungseinheiten 18a, 18b weg gefahren und ein neuer, zu bearbeitender Profilrahmen 1 hin zu diesen Bearbeitungseinheiten 18a, 18b verfahren werden kann.

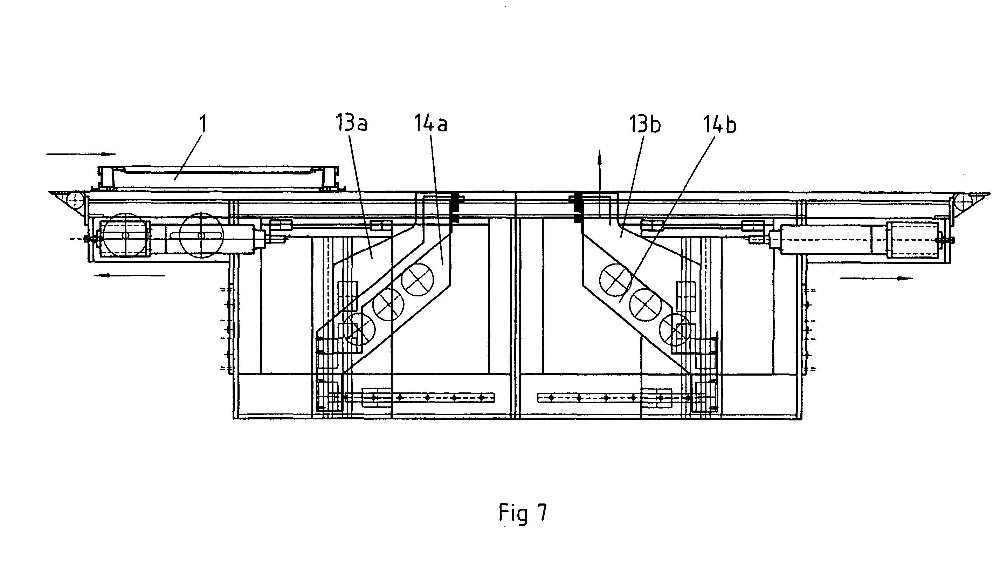

In den Figuren 7 bis 10 ist eine Außeneckzentrierung des Profilrahmens 1 mittels der Vorrichtung der Figuren 3 bis 6 im einzelnen dargestellt. Bei der Außeneckzentrierung wird der Profilrahmen bezüglich der Außenseite 24 zentriert, das heißt der Anschlag 13b mit ausgefahrenem Zylinder 16b der Tandemzylinder 16b, 17b gibt den Referenzpunkt für das Rahmenprofil 1 wieder. Die weiteren Bearbeitungsschritte entsprechen denjenigen gemäß den Figuren 3 bis 6, lediglich in spiegelverkehrter Arbeitsweise.

Es bleibt festzuhalten, daß im Rahmen der vorliegenden Erfindung wenigstens zwei Anschläge 13a, 13b, jeweils einer an der Innenseite 23 und der Außenseite 24 des Profilrahmens 1 und wenigstens zwei Spannvorrichtungen 14a, 14b, ebenfalls an der Innenseite 23 und Außenseite 24 des Profils zum Einsatz gelangen. Im Ausführungsbeispiel ist eine doppelte Anzahl von Anschlägen 13a, 13b und Spannvorrichtungen 14a, 14b vorgesehen, so daß das Rahmenprofil an zwei voneinander beabstandeten Stellen einer Seite des Profilrahmens 1 gegen jeweils zwei Anschläge 13a auf der Innenseite 23 und zwei Anschläge 13b auf der Außenseite 24 angeschlagen und mittels jeweils zweier Spannvorrichtungen 14a auf der Innenseite und 14b auf der Außenseite eingespannt werden kann.

Zusammenfassend stellt sich das Verfahren zum Spannen und gegebenenfalls Zentrieren von Profilrahmen 1, insbesondere mittels des Spannsystems 9 der beschriebenen Art wie folgt dar. Man fährt einander zugeordnete Anschläge 13a, 13b und Spannvorrichtungen 14a, 14b, gegebenenfalls unabhängig voneinander, an der Außenseite 24 des Profilrahmens 1 in vertikaler Richtung aus. Mittels der Transportvorrichtung 22 wird der Profilrahmen 1 gegen den oder die herausgefahrenen Anschläge 13a, 13b verfahren. Daraufhin werden die Transportvorrichtung gestoppt und einander zugeordnete Anschläge 13a, 13b und Spannvorrichtungen 14a, 14b, gegebenenfalls unabhängig voneinander, an der Innenseite 23 des Profilrahmens in vertikaler Richtung ausgefahren, einander zugeordnete Anschläge 13a, 13b und Spannvorrichtungen 14a, 14b an der Innenseite 23 gemeinsam in horizontaler Richtung hin zu den einander zugeordneten Anschlägen 13a, 13b und Spannvorrichtungen 14a, 14b an der Außenseite 24 oder umgekehrt die einander zugeordneten Anschläge 13a, 13b und Spannvorrichtungen 14a, 14b an der Außenseite 24 hin zu den einander zugeordneten Anschlägen 13a, 13b und Spannvorrichtungen 14a, 14b an der Innenseite 23 des Profilrahmens 1 verfahren und an wenigstens die Spannvorrichtungen 14a, 14b in vertikaler Richtung zum Spannen hin auf den Profilrahmen verfahren.

### Bezugszeichenliste

- 1: Profilrahmen eines Fensters oder einer Tür
- 2: Transportband
- 3: Anschlag
- 4a: obere Schalter (Einlegeschalter)
- 4b: unterer Schalter (Einlegeschalter)
- 5: Überschlag
- 6: Schieber
- 7: Verschiebezylinder
- 8: Spannbalken
- 9: Spannsystem
- 10: Transportband
- 11: Führungsschiene
- 12: Rahmen
- 13a: Anschlag
- 13b: Anschlag
- 14a: Spannvorrichtung
- 14b: Spannvorrichtung
- 15: hakenförmiger Fortsatz
- 16a: Tandemzylinder
- 16b: Tandemzylinder
- 17a: Tandemzylinder
- 17b: Tandemzylinder
- 18a: Bearbeitungseinheit mit Werkzeug
- 18b: Bearbeitungseinheit mit Werkzeug
- 19a: Zylinder
- 19b: Zylinder
- 20a: Zylinder
- 20b: Zylinder
- 21: Auflage
- 22: Transportvorrichtung
- 23: Innenseite
- 24: Außenseite

## Patentansprüche

1. Spannsystem (9) zum Spannen und gegebenenfalls Zentrieren von Profilrahmen (1), beispielsweise Fenster- oder Türrahmen bestehend aus verschweißten Kunststoffprofilen, in Kombination mit einer Verputzvorrichtung, zum Beispiel Eckenverputzvorrichtung, mit wenigstens zwei Bearbeitungseinheiten (18a, 18b) zur gleichzeitigen Bearbeitung, zum Beispiel zweier Ecken, des Profilrahmens (1), mit einer Transportvorrichtung (22) für den Profilrahmen (1) hin zu den Bearbeitungseinheiten (18a, 18b), mit in der Bearbeitungsposition des Profilrahmens (1) paarweise der Innenseite (23) und Außenseite (24) des Profilrahmens (1) zugeordneten, in vertikaler Richtung verstellbaren Anschlägen (13a, 13b) und mit in vertikaler Richtung verstellbaren Spannvorrichtungen (14a, 14b) zum Einspannen des Profilrahmens (1) in der Bearbeitungsposition, **dadurch gekennzeichnet, daß** die Spannvorrichtungen (14a, 14b) in der Bearbeitungsposition des Profilrahmens (1) paarweise der Innenseite (23) und der Außenseite (24) des Profilrahmens (1) zugeordnet sind sowie jeweils eine Spannvorrichtung (14a, 14b) und ein Anschlag (13a, 13b), die gemeinsam an der Innenseite (23) oder Außenseite (24) angeordnet sind, einander zugeordnet und gemeinsam in horizontaler Richtung verfahrbar sind.

2. Spannsystem nach Anspruch 1, **dadurch gekennzeichnet, daß** die Anschläge (13a, 13b) und Spannvorrichtungen (14a, 14b) unabhängig voneinander in vertikaler Richtung verfahrbar sind.

3. Spannsystem nach Anspruch 1 oder 2, **dadurch gekennzeichnet, daß** jeweils zwei Paare von Anschlägen (13a, 13b) und/oder Spannvorrichtungen (14a, 14b) vorgesehen sind.

4. Spannsystem nach einem der vorhergehenden Ansprüche, **dadurch gekennzeichnet, daß** sämtliche Anschläge (13a, 13b) und Spannvorrichtungen (14a, 14b), die jeweils der Innenseite (23) oder Außenseite (24) des Profilrahmens (1) zugeordnet sind, gemeinsam in horizontaler Richtung verfahrbar sind.

5. Spannsystem nach einem der vorhergehenden Ansprüche, **dadurch gekennzeichnet, daß** die Transportvorrichtung (22) aus zwei im wesentlichen parallelen Transportbändern (10) besteht, deren seitlicher Abstand verstellbar ist.

6. Spannsystem nach einem der vorhergehenden Ansprüche, **dadurch gekennzeichnet, daß** die Anschläge (13a, 13b) auf der Innenseite oder Außenseite des Transportbandes (10) und die Spannvorrichtungen (14a, 14b) auf der Außenseite oder Innenseite des Transportbandes (10) positioniert sind.

7. Spannsystem nach einem der vorhergehenden Ansprüche, **dadurch gekennzeichnet, daß** jedem Anschlag (13a, 13b) und jeder Spannvorrichtung (14a, 14b) zur Verstellung in vertikaler Richtung jeweils eine individuell betätigbare Hubvorrichtung, zum Beispiel Zylinder (19a, 19b, 20a, 20b) zugeordnet sind.

8. Spannsystem nach einem der vorhergehenden Ansprüche, **dadurch gekennzeichnet, daß** zum gemeinsamen Verfahren von jeweils einem Anschlag (13a, 13b) und der zugeordneten Spannvorrichtung (14a, 14b) in horizontaler Richtung eine Hubvorrichtung bereitgestellt ist.

9. Spannsystem nach einem der vorhergehenden Ansprüche, **dadurch gekennzeichnet, daß** die Hubvorrichtung als Tandemzylinder (16a, 17a, 16b, 17b) mit einem ersten Zylinder größeren und einem zweiten Zylinder kleineren Durchmesser ausgebildet ist.

10. Spannsystem nach einem der vorhergehenden Ansprüche, **dadurch gekennzeichnet, daß** die Spannvorrichtung (14a, 14b) Spannelemente mit hakenförmigen Fortsätzen (15), die das Rahmenprofil (1) in der Bearbeitungsposition gegen eine Auflage (21) oder dergleichen spannen, aufweist.

11. Spannsystem nach einem der vorhergehenden Ansprüche 1 bis 9, **dadurch gekennzeichnet, daß** die Spannvorrichtung (14a, 14b), bevorzugt Spannelemente mit hakenförmigen Fortsätzen 15, das Rahmenprofil (1) in der Bearbeitungsposition gegen die Transportvorrichtung (22), insbesondere das Transportband (10) und/oder die Führungsschiene (11), spannt.

12. Spannsystem nach einem der vorhergehenden Ansprüche, **dadurch gekennzeichnet, daß** der oder die Anschläge (13a, 13b) wenigstens einen, bevorzugt zwei Schalter (4a, 4b), bevorzugt Einlegeschalter, aufweisen.

13. Verfahren zum Spannen und gegebenenfalls Zentrieren von Profilrahmen (1) mit einer Transportvorrichtung für den Profilrahmen, insbesondere mittels eines Spannsystems (9) nach einem der vorhergehenden Ansprüche, **dadurch gekennzeichnet, daß** man einander zugeordnete Anschläge (13b) und Spannvorrichtungen (14b),
gegebenenfalls unabhängig voneinander, an der Außenseite (24) des Profilrahmens (1) in vertikaler Richtung ausfährt, mittels der Transportvorrichtung (22) den Profilrahmen (1) gegen den oder die herausgefahrenen Anschläge (13b) verfährt, die Transportvorrichtung stoppt und einander zugeordnete Anschläge (13a) und Spannvorrichtungen (14a), gegebenenfalls unabhängig voneinander, an der Innenseite (23) des Profilrahmens (1) in vertikaler Richtung ausfährt, einander zugeordnete Anschläge (13a) und Spannvorrichtungen (14a) an der Innenseite (23) gemeinsam in horizontaler Richtung hin zu den einander zugeordneten Anschlägen (13b) und Spannvorrichtungen (14b) an der Außenseite (24) oder umgekehrt die einander zugeordneten Anschläge (13b) und Spannvorrichtungen (14b) an der Außenseite (24) hin zu den an der Innenseite (23) angeordneten und einander zugeordneten Anschlägen (13a) und Spannvorrichtungen (14a) verfährt und dann die Spannvorrichtungen (14a, 14b) in vertikaler Richtung zum Spannen hin auf den Profilrahmen (1) verfährt.

14. Verfahren nach Anspruch 13, **dadurch gekennzeichnet, daß** man nach Bearbeitung des Rahmenprofils (1) die Spannvorrichtung (14a, 14b) vertikal nach oben und dann diese gemeinsam mit den jeweils zugeordneten Anschlägen (13a, 13b) in horizontaler Richtung weg vom Rahmenprofil (1) und anschließend in vertikaler Richtung nach unten verfährt.

15. Verfahren nach einem der vorhergehenden Ansprüche 13 oder 14, **dadurch gekennzeichnet, daß** man mittels der Spannvorrichtung (14a, 14b) das Rahmenprofil (1) in der Bearbeitungsposition gegen die Transportvorrichtung (22), insbesondere das Transportband (10) und/oder die Führungsschiene (11) spannt.

## Claims

1. Clamping system (9) for clamping and optionally centring profile frames (1), for example window frames or door frames, consisting of welded plastics material profile members, in combination with a dressing device, for example comer dressing device, with at least two processing units (18a, 18b) for simultaneous processing, for example of two comers, of the profile frame (1), with a transport device (22) for the profile frame (1) towards the processing units (18a, 18b), with abutments (13a, 13b) associated in pairs with the inner side (23) and outer side (24) of the profile frame (1) in the processing position of the profile frame (1) and adjustable in vertical direction and with clamping devices (14a, 14b), which are adjustable in vertical direction, for clamping of the profile frame (1) in the processing position, **characterised in that** the clamping devices (14a, 14b) are associated in pairs with the inner side (23) and the outer side (24) of the profile frame (1) in the processing position of the profile frame (1) and a respective clamping device (14a, 14b) and respective abutment (13a, 13b), which are arranged in common at the inner side (23) or outer side (24), are associated with one another and movable in common in horizontal direction.

2. Clamping system according to claim 1, **characterised in that** the abutments (13a, 13b) and clamping devices (14a, 14b) are movable independently of one another in vertical direction.

3. Clamping system according to claim 1 or 2, **characterised in that** two pairs of abutments (13a, 13b) and/or clamping devices (14a, 14b) are provided each time.

4. Clamping system according to one of the preceding claims, **characterised in that** all abutments (13a, 13b) and clamping devices (14a, 14b) respectively associated with the inner side (23) or outer side (24) of the profile frame (1) are movable in common in horizontal direction.

5. Clamping system according to one of the preceding claims, **characterised in that** the transport device (22) consists of two substantially parallel transport belts (10), the lateral spacing of which is adjustable.

6. Clamping system according to one of the preceding claims, **characterised in that** the abutments (13a, 13b) are positioned on the inner side or outer side of the transport belt (10) and the clamping devices (14a, 14b) are positioned on the outer side or inner side of the transport belt (10).

7. Clamping system according to one of the preceding claims, **characterised in that** a respective individually actuable stroke device, for example cylinder (19a, 19b, 20a, 20b), is associated with each abutment (13a, 13b) and each clamping device (14a, 14b) for adjusting in vertical direction.

8. Clamping system according to one of the preceding claims, **characterised in that** a horizontal stroke device is provided for the common movement each time of an abutment (13a, 13b) and the associated clamping device (14a, 14b) in horizontal direction.

9. Clamping system according to one of the preceding claims, **characterised in that** the stroke device is constructed as a tandem cylinder (16a, 17a, 16b, 17b) with a first cylinder of larger diameter and a second cylinder of smaller diameter.

10. Clamping system according to one of the preceding claims, **characterised in that** the clamping device (14a, 14b) comprises clamping elements with hook-shaped projections (15) which clamp the frame profile (1) in the processing position against a support (21) or the like.

11. Clamping system according to one of the preceding claims 1 to 9, **characterised in that** the clamping device (14a, 14b), preferably clamping elements with hook-shaped projections (15), clamps the frame profile (1) in the processing position against the transport device (22), particularly the transport belt (10) and/or the guide rail (11 ).

12. Clamping system according to one of the preceding claims, **characterised in that** the abutment or abutments (13a, 13b) has or have at least one, preferably two, switches (4a, 4b), preferably inset switches.

13. Method of clamping and optionally centring profile frames (1), with a transport device for the profile frames, particularly by means of a clamping system (9) according to one of the preceding claims, **characterised in that** mutually associated abutments (13b) and clamping devices (14b) are moved out in vertical direction and optionally independently of one another at the outer side (24) of the profile frame (1), the profile frame (1) is moved by means of the transport device (22) against the abutment or abutments (13b) which have been moved out, the transport device is stopped and mutually associated abutments (13a) and clamping devices (14a) are moved out in vertical direction and optionally independently of one another at the inner side (23) of the profile frame (1), mutually associated abutments (13a) and clamping devices (14a) at the inner side (23) are moved in common in horizontal direction towards the mutually associated abutments (13b) and clamping devices (14b) at the outer side (24) or conversely the mutually associated abutments (13b) and clamping devices (14b) at the outer side (24) are moved towards the mutually associated abutments (13a) and clamping devices (14) arranged at the inner side (23) and then the clamping devices (14a, 14b) are moved in vertical direction forwards onto the profile frame (1) for the clamping.

14. Method according to claim 13, **characterised in that** after processing of the frame profile (1) the clamping device (14a, 14b) is moved vertically upwardly and then this is moved together with the respectively associated abutments (13a, 13b) in horizontal direction away from the frame profile (1) and subsequently downwardly in vertical direction.

15. Method according to one of the preceding claims 13 and 14, **characterised in that** the frame profile (1) is clamped in the processing position against the transport device (22), particularly the transport belt (10) and/or the guide rail (11), by means of the clamping device (14a, 14b).

## Revendications

1. Dispositif de serrage (9) permettant le serrage et éventuellement le centrage de châssis en profilés (1), par exemple de châssis de fenêtre ou de châssis de porte constitués de profilés en matière plastique soudés, en combinaison avec un dispositif d'ébavurage, par exemple un dispositif d'ébavurage d'angles, comprenant au moins deux unités d'usinage (18a, 18b) servant à l'usinage simultané, par exemple de deux angles, du châssis en profilés (1), un dispositif de transport (22) pour le châssis en profilés (1) jusqu'aux unités d'usinage (18a, 18b), des butées (13a, 13b) associées par paires, dans la position d'usinage du châssis en profilés (1), à la face intérieure (23) et à la face extérieure (24) du châssis en profilés et réglables suivant la direction verticale, et des dispositifs de serrage (14a, 14b) réglables suivant la direction verticale et servant au serrage du châssis en profilés (1) dans la position d'usinage, **caractérisé en ce que** les dispositifs de serrage (14a, 14b) sont associés par paires, dans la position d'usinage du châssis en profilés (1), à la face intérieure (23) et à la face extérieure (24) du châssis en profilés (1) et que respectivement un dispositif de serrage (14a, 14b) et une butée (13a, 13b), qui sont disposés en commun sur la face intérieure (23) ou la face extérieure (24), sont associés l'un à l'autre et sont déplaçables en commun suivant la direction horizontale.

2. Dispositif de serrage suivant la revendication 1, **caractérisé en ce que** les butées (13a, 13b) et les dispositifs de serrage (14a, 14b) sont déplaçables indépendamment les uns des autres suivant la direction verticale.

3. Dispositif de serrage suivant la revendication 1 ou 2, **caractérisé en ce que** ce sont respectivement deux paires de butées (13a, 13b) et/ou de dispositifs de serrage (14a, 14b) qui sont prévues.

4. Dispositif de serrage suivant l'une des revendications précédentes, **caractérisé en ce que** toutes les butées (13a, 13b) et tous les dispositifs de serrage (14a, 14b) qui sont respectivement associés à la face intérieure (23) ou à la face extérieure (24) du châssis en profilés (1) sont déplaçables en commun suivant la direction horizontale.

5. Dispositif de serrage suivant l'une des revendications précédentes, **caractérisé en ce que** le dispositif de transport (22) est constitué de deux bandes transporteuses (10) essentiellement parallèles dont l'espacement transversal est réglable.

6. Dispositif de serrage suivant l'une des revendications précédentes, **caractérisé en ce que** les butée (13a, 13b) sont positionnées sur le côté intérieur ou le côté extérieur de la bande de transport (10) et les dispositifs de serrage (14a, 14b) sur le côté extérieur ou le côté intérieur de la bande de transport (10).

7. Dispositif de serrage suivant l'une des revendications précédentes, **caractérisé en ce qu'**à chaque butée (13a, 13b) et à chaque dispositif de serrage (14a, 14b), il est associé, pour le réglage suivant la direction verticale, un dispositif à mouvement dans un sens et dans l'autre, par exemple un vérin (19a, 19b, 20a, 20b), pouvant être actionné individuellement.

8. Dispositif de serrage suivant l'une des revendications précédentes, **caractérisé en ce que**, pour le déplacement commun de chaque butée (13a, 13b) et du dispositif de serrage (14a, 14b) associé, suivant la direction horizontale, un dispositif de mouvement dans un sens et dans l'autre est prévu.

9. Dispositif de serrage suivant l'une des revendications précédentes, **caractérisé en ce que** le dispositif de mouvement dans un sens dans l'autre est réalisé sous forme d'un vérin tandem (16a, 17a, 16b, 17b) comportant un premier vérin de plus grand diamètre et un second vérin de plus petit diamètre.

10. Dispositif de serrage suivant l'une des revendications précédentes, **caractérisé en ce que** le dispositif de serrage (14a, 14b) comprend des éléments de serrage présentant des embouts (15) en forme de crochet qui serrent le profilé de châssis (1), dans la position d'usinage, contre un appui (21) ou analogue.

11. Dispositif de serrage suivant l'une des revendications précédentes 1 à 9, **caractérisé en ce que** le dispositif de serrage (14a, 14b), de préférence des éléments de serrage présentant des embouts en forme de crochet (15) en forme de crochet, serre le profilé de châssis (1), dans la position d'usinage, contre le dispositif de transport (22), notamment la bande transporteuse (10) et/ou le rail de guidage (11).

12. Dispositif de serrage suivant l'une des revendications précédentes, **caractérisé en ce que** la ou les butées (13a, 13b) comportent au moins un, de préférence deux, interrupteurs (4a, 4b), de préférence des interrupteurs intégrés.

13. Procédé permettant le serrage et éventuellement le centrage de châssis en profilés (1) comportant un dispositif de transport pour le châssis en profilés, notamment au moyen d'un dispositif de serrage (9) suivant l'une des revendications précédentes, **caractérisé en ce qu'**on déploie suivant la direction verticale des butées (13b) et des dispositifs de serrage (14b) associés entre eux, éventuellement indépendamment les uns des autres, au niveau de la face extérieure (24) du châssis en profilés (1), on fait avancer le châssis en profilés (1). au moyen du dispositif de transport (22), en appui sur la ou les butées (13b) déployées, on arrête le dispositif de transport et on déploie suivant la direction verticale des butées (13a) et des dispositifs de serrage (14a) associés entre eux, éventuellement indépendamment les uns des autres, au niveau de la face intérieure (23) du châssis en profilés (1), on fait avancer, en commun suivant la direction horizontale, soit les butées (13a) et dispositifs de serrage (14a) associés entre eux situés au niveau de la face intérieure (23) vers les butées (13b) et dispositifs de serrage (14b) associés entre situés à l'endroit de la face extérieure (24) soit, inversement, les butées (13b) et dispositif de serrage (14b) associés entre eux situés au niveau de la face extérieure (24) vers les butées (13a) et dispositifs de serrage (14a) situés au niveau de la face intérieure (23) et associés entre eux, puis on fait avancer les dispositifs de serrage (14a, 14b) suivant la direction verticale pour le serrage sur le châssis en profilés (1 ).

14. Procédé suivant la revendication 13, **caractérisé en ce qu'**après usinage du châssis en profilés (1 ), on fait avancer le dispositif de serrage (14a, 14b) verticalement vers le haut, puis on fait avancer celui-ci en commun avec les butées (13a, 13b) respectivement associées, suivant la direction horizontale en les éloignant du châssis en profilés (1), puis suivant la direction verticale vers le bas.

15. Procédé suivant l'une des revendications précédentes 13 ou 14, **caractérisé en ce qu'**au moyen du dispositif de serrage (14a, 14b), on serre le châssis en profilés (1), dans la position d'usinage, en appui sur le dispositif de transport (22), notamment la bande transporteuse (10) et/ou le rail de guidage (11).
